# EUROPEAN PATENT SPECIFICATION

(11) **EP 1 990 679 B1**
(45) Date of publication and mention of the grant of the patent: **28.04.2010**
(21) Application number: 08155955.1
(22) Date of filing: 09.05.2008
(51) Int. Cl.: G02F 1/1335, G02F 1/1362, G02F 1/1333

(54) **Liquid crystal display and manufacturing method thereof**
Flüssigkristallanzeige und Herstellungsverfahren dafür
Écran à cristaux liquides et procédé de fabrication correspondant

(30) Priority: 11.05.2007 KR 20070046108
(43) Date of publication of application: 12.11.2008
(73) Proprietor: Samsung Mobile Display Co., Ltd., Suwon-si Gyeonggi-do (KR)
(72) Inventor: Park, Jiryun, Yongin-si, Gyeonggi-do (KR)
(74) Representative: Hengelhaupt, Jürgen

(56) References cited:
- EP-A- 1 477 842
- JP-A- 2006 215 060
- US-A1- 2006 103 771
- US-A1- 2006 146 236

## Description

### BACKGROUND OF THE INVENTION

### 1. Field of the Invention

The present invention relates to a liquid crystal display.

### 2. Description of the Related Art

In general, a liquid crystal display may be classified as a transmissive liquid crystal display that uses a backlight as a light source and a reflective liquid crystal display that uses natural light as a light source. The transmissive liquid crystal display uses the backlight as the light source so that it can produce a bright image even in a dark environment. However, in a bright environment, it is difficult to operate the transmissive liquid crystal display, and it consumes a large amount of power.

On the other hand, since the reflective liquid crystal display does not include a backlight, it reduces power consumption, but it can not be used when the environment is dark.

As an alternative, a transflective liquid crystal display can overcome the above described restriction of the reflective liquid crystal display. The transflective liquid crystal display has both a reflective region and a transmission region within a unit pixel so that it can be used as both a reflective type liquid crystal display and a transmissive liquid crystal display, as needed.

A typical transflective liquid crystal display includes a separate reflective electrode that reflects light to the reflective region . Generally, a masking process is required so as to form the separate reflective electrode, wherein seven to nine masks are generally used. Since the transflective liquid crystal display uses more masks as compared to the transmissive liquid crystal display that uses four to five masks, the manufacturing cost of the transflective liquid crystal display is higher.

Prior art EP 1477842 A1 describes a solution for this problem wherein the storage capacitor includes a reflective electrode.

### SUMMARY OF THE INVENTION

It is an aspect according to an embodiment of the present invention to provide a liquid crystal display and a manufacturing method thereof, which does not require a separate reflective electrode by using a metal electrode of a storage capacitor as a reflector.

It is another aspect according to an embodiment of the present invention to provide a liquid crystal display and a manufacturing method thereof capable of displaying images by including an optional color filter in a reflective region of an upper substrate. The reflective region includes no black matrix and corresponds to a storage capacitor on a lower substrate that reflects light.

It is another aspect of the present invention to provide a liquid crystal display and a manufacturing method thereof capable of improving the image quality of a reflective region by forming an organic film for a dual cell gap structure in the reflective region of an upper substrate corresponding to a storage capacitor on a lower substrate.

In addition, it is still another aspect of the present invention to provide a manufacturing method of a transflective liquid crystal display capable of being made at a low cost.

According to an embodiment of the present invention, a transflective liquid crystal display is provided. The transflective liquid crystal display includes: a first substrate; a second substrate facing the first substrate, a thin film transistor on a side facing the second substrate of the first substrate; a storage capacitor on the said facing the second substrate of the first substrate, the storage capacitor including a reflective electrode configured to reflect external light received through the second substrate; a black matrix on a side facing the first substrate of the second substrate; a color filter on the side facing the first substrate of the second substrate; an organic film on a reflective region of the second substrate, the reflective region corresponding to the storage capacitor on the first substrate; and liquid crystals between the first substrate and the second substrate.

The transflective liquid crystal display further includes a common electrode on the black matrix and the color filter, and the organic film is on the common electrode.

The organic film may be on the color filter in the reflective region. The organic film may be on the reflective region of the second substrate that is different from another region of the second substrate in which the black matrix and the color filter are located.

A thickness of the organic film may be one half the total thickness of the liquid crystals. The organic film may provide a path traveled by a reflected light through the liquid crystals in the reflective region, wherein a distance traveled by the reflected light within the liquid crystals is equal to a distance traveled by a transmitted light within the liquid crystals in a transmission region.

A manufacturing method of a transflective liquid crystal display is provided. The method includes: forming a thin film transistor and a storage capacitor on a first substrate, the storage capacitor having a reflective electrode; providing a second substrate facing the first substrate, forming a black matrix and a color filter on a side facing the first substrate on the second substrate; bonding the lower substrate and the second substrate together; and implanting liquid crystals between the bonded first and second substrates.

The storage capacitor may further include a pixel electrode. The reflective electrode of the storage capacitor may include any one selected from Al, AINd, Mo, Cr, Mo/AINd(double), MoW, or equivalents thereof.

The color filter may be on a reflective region of the second substrate, and the reflective region corresponds to the storage capacitor on the first substrate.

The black matrix and the color filter may be on a region of the second substrate other than the reflective region corresponding to the storage capacitor on the first substrate.

According to still another aspect, a manufacturing method of a liquid crystal display is provided. The method includes: forming a thin film transistor and a storage capacitor on a first substrate, the storage capacitor including a reflective electrode; forming a black matrix and a color filter on a side facing the first substrate on a second substrate; forming an organic film on a reflective region on the side facing the first substrate of the second substrate, the reflective region corresponding to the storage capacitor on the first substrate; bonding the first substrate and the second substrate together; and implanting liquid crystals between the bonded upper and lower substrates.

The organic film may be on the color filter in the reflective region and the organic film corresponds to the storage capacitor.

The organic film may be on the reflective region, and the black matrix and the color filter are on a region different from the reflective region.

The method may further provide a common electrode, wherein the common electrode is on the black matrix and the color filter, and the organic film is on the common electrode.

The method may further provide a common electrode on the black matrix, the color filter, and the organic film.

A thickness of the organic film may have half of the total thickness of the liquid crystals.

The organic film may provide a path traveled by a reflected light through the liquid crystals in the reflective region, wherein a distance traveled by the reflected light within the liquid crystals is equal to a distance traveled by a transmitted light within the liquid crystals in a transmission region.

Hereinafter, exemplary embodiments of the present invention will be described below with reference to the accompanying drawings.

### BRIEF DESCRIPTION OF THE DRAWINGS

The above and other aspects and features of the present invention will be more apparent from the following detailed description taken in conjunction with the accompanying drawings, in which:

FIG. 1 is a cross-sectional view illustrating a liquid crystal display according to a comparative example;

FIG. 2 is a cross-sectional view illustrating a transflective liquid crystal display according to an exemplary embodiment of the present invention;

FIG. 3 is a cross-sectional view illustrating a liquid crystal display according to a comparative example;

FIG. 4 is a flow diagram for explaining a manufacturing method of a liquid crystal display;

FIGs. 5a to 5l are cross-sectional views for illustrating a manufacturing method of a liquid crystal display;

FIG. 6 is a flow diagram for explaining a manufacturing method of liquid crystal displays.

FIGs. 7a to 7e are cross-sectional views for illustrating an exemplary manufacturing method of a liquid crystal display.

### DETAILED DESCRIPTION OF THE EMBODIMENTS

A liquid crystal display according to one comparative example will be described.

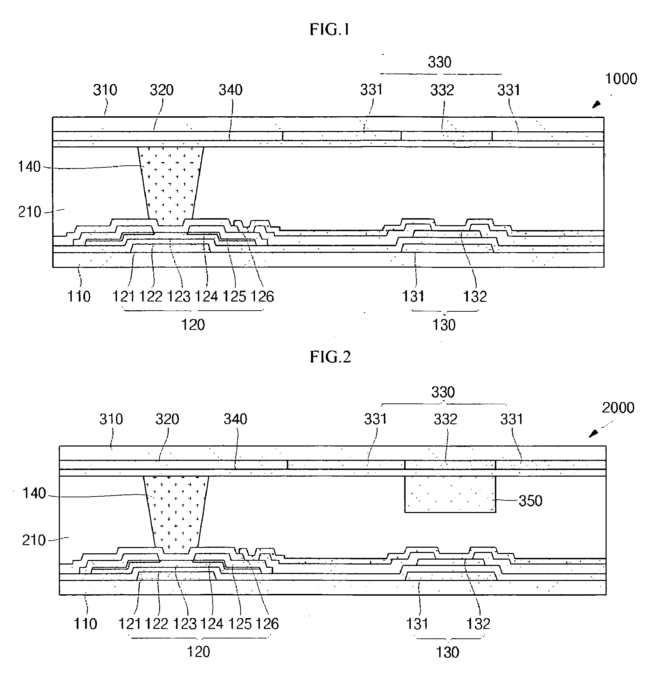

FIG. 1 is a cross-sectional view illustrating a liquid crystal display 1000 according to an exemplary embodiment of the present invention

As shown in FIG. 1, the liquid crystal display 1000 includes a lower substrate 110, a thin film transistor 120, a storage capacitor 130, a spacer 140, a liquid crystal layer 210, an upper substrate 310, a black matrix 320, a color filter 330, and a common electrode 340.

The lower substrate 110 is an original plate on which the thin film transistor 120 is formed. Since the light of a backlight unit (BLU) is transmitted through the lower substrate 110, the material of the lower substrate 110 should be transparent. Accordingly, it is generally made of glass, and its thickness is generally about 0.5 to 0.7 mm. A fusion method and a floating method have largely been used as a method of making the glass for the lower substrate 110.

In the floating method, the glass for the substrate 110 is made by flowing a melted glass that is boiled in a melting furnace into a horizontal roller(melted tin). However, in the floating method the glass contacts the roller so that a further process is needed for polishing the glass later.

In the fusion method, a melted glass is cooled by letting it fall vertically in the air after it flows out of a melting furnace. Accordingly, the fusion method has an advantage that the surface quality of the glass is improved because no contact to the surface of the melted glass is made when the melted glass is formed.

The thin film transistor 120 includes: a gate electrode 121 formed on the upper side of the lower substrate 110; a gate insulating layer 122 formed on the lower substrate 110 and the upper side of the gate electrode 121; a silicon layer 123 formed on the upper side of the gate insulating layer 122; a semiconductor layer 124 formed on the upper side of the silicon layer 123; a source/drain electrode 125 formed on the upper side of the semiconductor layer 124; and a protective layer 126 on the source/drain electrode 125 and the upper side of the gate insulating layer 122.

The gate electrode 121 is formed on the lower substrate 110, wherein it is formed on the same layer as the lower electrode 131 of the storage capacitor 130. According to an exemplary embodiment of the present invention, the lower electrode 131 of the capacitor functions as a reflective electrode. Accordingly, the lower electrode 131 of the storage capacitor 130, as will be described below, may be made of Al, AlNd, Mo, Cr, Mo/AlNd(double), MoW or an equivalent thereof.

The gate electrode 121 is generally formed using a sputtering method. The sputtering method uses argon cation (Ar+) accelerated using high voltage. When kinetic energy of the argon cation (Ar+) is larger than bond energy between metal atoms, the sputtering method separates atoms from the metal surface. The sputtered metal atoms consumes their energy through their mutual collision and interference and are mutually bonded at a surface of a glass substrate to be grown in a thin film form. However, the present invention is not limited to the material and manufacturing methods of the gate electrode 121 described above.

The gate insulating layer 122 is formed over the gate electrode 121 and the lower substrate 110. The gate insulating layer 122 provides insulation function between the gate electrode 121 and the source/drain electrode 125 and is generally deposited using, for example, silicon nitride (SiNₓ).

The gate insulating layer 122 is generally formed using a plasma enhanced chemical vapor deposition (PECVD) method. The PECVD method is a process that includes: implanting chemical vapor into a chamber in a vacuum state, resolving gas molecules by colliding electrons that obtain high energy using an electric field with gas molecules in neutral state, and depositing a thin film by using a reaction for attaching the resolved gas atoms to the substrate. However, the present invention is not limited to the material and manufacturing methods of the gate insulating layer 122 as described above.

The silicon layer 123 is formed on the gate insulating layer 122. A channel is formed on the silicon layer 123 when voltage is applied to the gate electrode 121, and the silicon layer 123 is typically formed using the PECVD method.

The silicon layer 123 is typically formed using, for example, amorphous silicon (a-Si) because the glass of the lower substrate 110 is amorphous, and poly silicon (poly-Si) may be formed in order to increase electron mobility. The poly silicon (poly-Si) is formed by growing grains by depositing the amorphous silicon (a-Si) on the substrate and then heating the substrate. The poly silicon (poly-Si) is divided into low temperature poly silicon (LTPS) and high temperature poly silicon (HTPS) depending on process temperature.

Regarding crystallization methods, some examples are a solid phase crystallization (SPC) method, a field enhanced rapid thermal annealing (FERTA) method, an excimer laser annealing (ELA) method, a sequential lateral solidification (SLS) method, a metal induced crystallization (MIC) method, a metal induced lateral crystallization (MILC) method, a super grain silicon (SGS) method, etc.

However, the silicon layer 123 is not limited to the material and manufacturing methods of the silicon layer 123 as described above.

The semiconductor layer 124 is formed on the upper side of the silicon layer 123. The semiconductor layer 124 is formed by doping impurities into a desired portion in a region of the silicon layer 123 using a mask. The impurities that are implanted into the semiconductor layer 124 may include group III elements and group V elements. However, since electron mobility is larger than hole mobility, the group III elements are mainly used to form an N-type semiconductor.

As a method of doping the impurities into the semiconductor layer 124, an ion implantation method is typically used. Using the ion implantation method, a semiconductor device is manufactured by implanting impurity ions. The ion implantation method can be used to implant the impurity ions even at room temperature, control the amount of impurity ions implanted precisely and uniformly, heat-treat the impurity sufficiently at the temperature of 1000°C or less, and control a thickness of an implantation layer with acceleration voltage of ions, etc. However, the present invention is not limited to the material and manufacturing methods of the semiconductor layer 124 as described above.

The source/drain electrode 125 is formed on the upper side of the semiconductor layer 124. The source/drain electrode 125 is deposited over the lower substrate and is then formed in a desired pattern using a mask. The source/drain electrode 125 can be made of the same material as the gate electrode 121. Thereafter, the source/drain electrode 125 is electrically connected to the pixel electrode 132.

The protective layer 126 is formed on the source/drain electrode 125 and the upper side of the silicon layer 123. The protective layer 126 protects the main portions of the pixel and the silicon layer 123 of the thin film transistor 120 against moisture or scratch which can be generated in a subsequent process. Accordingly, silicon nitride (SiNₓ) with high transmittance, moisture resistance, and durability is deposited as the protective layer 126 using the PECVD method. However, the present invention is not limited to the material and manufacturing methods of the protective layer 126 as described above.

The storage capacitor 130 is electrically connected to the thin film transistor 120. The storage capacitor 130 stores data values as a voltage supplied through the thin film transistor 120 and constantly maintains the voltage across the liquid crystal layer 210. Thereby, the liquid crystal display 1000 can maintain a desired brightness (e.g., a predetermined brightness) for one frame of an image.

The storage capacitor 130 is constituted by the lower electrode 131 and the pixel electrode 132.

The lower electrode 131 is formed on the lower substrate 110 and can be formed using the same process as the gate electrode 121. In a conventional liquid crystal display, light cannot travel through a lower electrode of a storage capacitor. Accordingly, in the upper substrate of the conventional liquid crystal display, a reflective region corresponding to the portion formed with the lower electrode is formed with a black matrix. Also, since this black matrix occupies a portion of the pixels, the aperture ratio of the conventional liquid crystal display is lowered.

The lower electrode 131 according to an embodiment of the present invention functions as a reflective electrode that reflects the external light so that it can improve brightness. The lower electrode 131 according to embodiments of the present invention can be manufactured by using any one selected from Al, AlNd, Mo, Cr, Mo/AlNd(double), and MoW, or the equivalent thereof, which can reflect the external light.

Also, in the liquid crystal display 1000 according to the embodiment of the present invention as will be described further below, in the upper substrate 310, the black matrix 320 is not located in the reflective region corresponding to the lower electrode 131. The reflective region is formed with the color filter 330 instead of the black matrix 320. In other words, light can travel through the reflective region, unlike the conventional liquid crystal display described above.

Accordingly, in the liquid crystal display 1000, the external light is reflected from the lower electrode 131 of the storage capacitor 130, and the reflected external light travels through the transparent upper substrate 310 and/or the color filter 330 formed on the upper substrate 310, thereby making it possible to improve the aperture ratio. In other words, unlike the conventional liquid crystal display, in the liquid crystal display 1000, the black matrix 320 is not located in (or is removed from) a region of the pixels corresponding to the lower electrode 131 that reflects the external light, thereby making it possible to increase the aperture of the liquid crystal display 1000.

Furthermore, the liquid crystal display 1000 according to the embodiments of the present invention uses the lower electrode 131 of the storage capacitor 130 as the reflective electrode so that it include no separate reflective electrode, thereby making it possible to remove the step of forming the mask for forming the separate reflective electrode.

The pixel electrode 132 is formed over the upper side of the protective layer 126 after forming the protective layer 126. However, since the pixel electrode 132 is formed only in the region for transmitting light, it is formed only in the region other than the region in which the thin film transistor 120 is formed, as shown in FIG. 1. the pixel electrode 132 is generally formed with a thickness of about 0.1 to 0.3µm.

However, the pixel electrode 132 should be electrically connected to the source/drain electrode 125 of the thin film transistor 120. Accordingly, the upper side of the source/drain electrode 125 is electrically connected with the pixel electrode 132 via a contact hole that is formed by etching the protective layer 126.

Since light travels through the pixel electrode 132, it is formed of a transparent material. The material of the pixel electrode 132 can have a light transmittance of about 80% in the wavelength range of visible light (e.g., 400nm to 700nm) and a high conductivity approximately up to 10³[S/cm]. For example, the material of the pixel electrode 132 may be indium tin oxide (ITO), tin oxide (SnO₂), or zinc oxide (ZnO), etc. Among these exemplary material, the indium tin oxide (ITO) is primarily used. However, the present invention is not limited to the material of the pixel electrode 132.

As described above, in the liquid crystal display 1000, the lower electrode 131 of the storage capacitor 130 is used as the reflective electrode, and the black matrix 320 is not located (or formed) in the portion of the upper substrate 310 that corresponds to the storage capacitor 130, thereby making it possible to increase brightness. In one embodiment, the color filter 330 is located on the portion of the upper substrate that corresponds to the storage capacitor 130.

Although not shown in FIG. 1 separately, an alignment film is printed on the thin film transistor 120 and the pixel electrode 132. The alignment film controls the aligning and movement of the liquid crystals in the liquid crystal layer 210. The alignment film aligns the liquid crystals in the liquid crystal layer 210 in a single direction to obtain a uniform screen and improves overall display quality of the liquid crystal display 1000 by allowing the liquid crystals in the liquid crystal layer 210 to rapidly react in a single direction in response to an external electric field. The alignment film can be a twisted nematic (TN) type that can be applied in devices such as cellular phone, general purpose monitor, or a notebook computer, etc. The alignment film can also be a vertical alignment type, or an in plane switching type that can be applied to devices such as a large monitor or liquid a crystal display (LCD) TV, etc.

Thereafter, a rubbing process is performed. The rubbing process is a process that aligns the liquid crystals in the liquid crystal layer 210 by rubbing the alignment film with a rubbing cloth in constant force, speed, and direction to generate a valley. Also, the visible direction of an LCD according to the application of the LCD is also determined in the rubbing process.

The spacer 140 is formed on the upper side of the protective layer 126 as shown in FIG. 1. In other words, The spacer 140 is the last component formed in the manufacturing process of the lower substrate 110. The spacer 140 is provided to constantly maintain a gap between the lower substrate 110 and the upper substrate 310. Since the spacer 140 is generally formed of an opaque material, it is formed on the upper side of the thin film transistor 120 in order to raise the aperture ratio of the liquid crystal display 1000.

The spacer 140 should be dispersed to have a substantially constant dispersion rate. The dispersion rate is defined as the number of spacers per certain area. The spacer 140 may be formed using glass or plastic. As to dispersion methods, there are a dry method and a wet method. The wet method is excellent for dispersion; however, the dry method is primarily used because of environment issues. There are several dry methods. Among the dry methods, an electrostatic dispersion method has been commonly used.

The liquid crystal layer 210 is disposed between the lower substrate 110 and the upper substrate 310. In the structure shown in FIG.1, the liquid crystal layer 210 is located at an intermediate layer, however in the actual process it is implanted (or injected) after the bond of the upper substrate 310 and the lower substrate 110 is made.

The liquid crystal layer 210 is made of a material having both viscosity as a liquid and crystallinity of a solid. When a voltage is applied, the liquid crystals in the liquid crystal layer 210 are arranged as bar-like crystals with a size of several tens of A in the voltage applying direction, and when voltage is not applied, the liquid crystals return to their original state. The liquid crystal layer 210 has a continuum property, that is, when a deformation is generated when force is applied to any one point of the liquid crystal layer 210, it affects neighboring molecules. Also, the liquid crystals in the liquid crystal layer 210 have a bar-like crystalline shape so that they have a certain direction at the time of applying the voltage according to a difference in permittivity between a major axis and a minor axis, thereby making it possible to perform a function of a shutter.

Some exemplary embodiments of liquid crystals for the liquid crystal layer 210 include a nematic liquid crystal, a smectic liquid crystal, and a cholesteric liquid crystal, etc. However, the present invention is not limited to any particular type of liquid crystal.

The upper substrate 310 is similar to the lower substrate 110. In more detail, the upper substrate 310 is a glass capable of transmitting light and is the same as the lower substrate 110, except that the black matrix 320, the color filter 330, and the common electrode 340 are formed on the upper substrate 310. Therefore, the description thereof will be omitted.

The black matrix 320 is formed between the liquid crystal layer 210 and the upper substrate 310 as shown in FIG. 1. In the actual process, since the upper substrate 310 is provided with the black matrix 320 and then bonded to the lower substrate 110, the black matrix 320 is formed on the upper substrate 310. The black matrix 320 is formed in the region where no light is transmitted to improve the contrast of the red (R), green (G), and blue (B) pixels. In some embodiments, the black matrix 320 may be formed using material such as Cr, Cr/CrOₓ bilayer, carbon pigment, RGB mixing pigment, and graphite, etc. The black matrix 320 is formed in a region corresponding to the thin film transistor 120 in the upper substrate 310, where the region does not transmit light.

A first method of forming the black matrix 320 includes depositing an opaque metal with low reflection characteristic such as Cr and then patterning it. A second method of forming the black matrix 320 includes coating the upper substrate 310 with a photosensitive black resin and then exposing and etching it. However, the present invention is not limited to the material and manufacturing methods of the black matrix 320.

In a conventional liquid crystal display, the black matrix 320 is formed even in the reflective region corresponding to the lower electrode 131 of the storage capacitor 130 in the upper substrate 310. Since the storage capacitor 130 is formed in the pixel region, if the black matrix 320 is formed in a portion of the pixel region as described above, the aperture ratio of the conventional liquid crystal display is lowered.

In the liquid crystal display 1000, the lower electrode 131 of the storage capacitor 130 functions as the reflective electrode as described above. Accordingly, the black matrix 320 is not formed in the reflective region corresponding to the lower electrode 131 of the storage capacitor 130 in the upper substrate 310. The color filter 330 is formed instead of the black matrix 320 so that the external light reflected from the lower electrode 131 can be transmitted through the upper substrate 310. Thereby, the liquid crystal display 1000 has an improved aperture ratio.

The color filter 330 is formed in the region capable of transmitting light in the upper substrate 310. Since the liquid crystal display 1000 is a non-emissive type display that displays images using light emitted from a backlight unit (BLU), the color filter 330 is used in one embodiment to filter the light from the BLU into the R, G, and B colors. The color filter 330 is formed on a region of the upper substrate 310 corresponding to the pixel electrode 132 on the lower substrate 110. The reason is that light can only be transmitted in the portion of the liquid crystal display 1000 where the pixel electrode 132 is located on the lower substrate 110.

The methods of forming the color filter 330 include a dye method and a pigment method according to the material used for manufacturing the color filter 330. Some manufacturing methods are a dyeing method, a pigment dispersion method, an electro deposition method, and a printing method, etc.. The pigment dispersion method is generally used.

As shown in FIG. 1, the color filter 330 includes a first color filter 331 for the transmission region and a second color filter 332 for the reflective region.

In the conventional liquid crystal display, the reflective region corresponding to the lower electrode 131 of the storage capacitor 130 cannot be formed with the color filter 330. The reason is that in the conventional liquid crystal display as described above, the storage capacitor 130 cannot reflect light. However, in the liquid crystal display 1000, the lower electrode 131 of the storage capacitor 130 is used as the reflective electrode to allow the reflected light to transmit through the upper substrate 310. Accordingly, the second color filter 332 can be formed on the reflective region of the upper substrate 310 corresponding to the storage capacitor 130. Also, in some embodiments, the second color filter 332 is not formed on the transparent upper substrate 310 in the reflective region.

In other words, unlike the conventional liquid crystal display, the black matrix 320 is not formed in the reflective region, and the second color filter 332 may be formed in the reflective region of the upper substrate 310, instead of forming the black matrix 320 in the reflective region corresponding to the storage capacitor 130. Accordingly, the light reflected from the storage capacitor 130 can be transmitted through the upper substrate 310 so that the aperture ratio of the liquid crystal display 1000 can be improved.

The common electrode 340 is formed on the black matrix 320 and the color filter 330 on the upper substrate 310. The common electrode 340 is used to apply a voltage to the liquid crystal layer 210 and is formed of a transparent material in order to transmit the light therethrough. The common electrode 340 is formed similarly as the pixel electrode 132 described above except that the common electrode 340 is also formed over the thin film transistor 120. Accordingly, the description of the common electrode 340 will be omitted.

Although not shown in the drawings, the common electrode 340 is also printed with the alignment film so as to constantly maintain the direction of the liquid crystals in the liquid crystal layer 210, and the rubbing process is performed on the alignment film. Since the alignment film printing and rubbing processes are the same as those described in reference to the lower electrode 131, the description thereof will be omitted.

Also, although not shown in the drawings separately, a seal printing process is performed on the upper substrate 310 after the common electrode 340 is formed. A sealant used for the seal printing process is used to make a liquid crystal cell between the upper substrate 310 and the lower substrate 110. After the upper substrate 310 and the lower substrate 110 are formed, they are bonded. Prior to implanting (e.g., injection) the liquid crystals, the bonded substrates are cut into panels. Then, the liquid crystal layer 210 is implanted into each of the panels, and each panel is sealed by the sealant to create the liquid crystal cell between the substrates. The sealant protects the liquid crystal cell from the external environment. Examples of the material of the sealant includes thermosetting resin and UV-curing resin.

As described above, the liquid crystal display 1000 uses the lower electrode 131 of the storage capacitor 130 as the reflective electrode so that a separate reflective electrode is not needed, thereby making it possible to remove the step of forming the mask for the separate reflective electrode.

In the liquid crystal display 1000, the black matrix 320 is not formed in the reflective region in the region corresponding to the storage capacitor 130, and the second color filter 332 is formed in the reflective region, thereby making it possible to increase brightness of the liquid crystal display 1000.

Hereinafter, a transflective liquid crystal display 2000 according to the present invention will be described.

FIG. 2 shows a cross-sectional view of the liquid crystal display 2000 according to the present invention.

As shown in FIG. 2, the liquid crystal display 2000 includes the lower substrate 110, the thin film transistor 120, the storage capacitor 130, the spacer 140, the liquid crystal layer 210, the upper substrate 310, the black matrix 320, the color filter 330, the common electrode 340, and an organic film 350 formed on the common electrode 340.

As shown in FIG. 2, the liquid crystal display 2000 is substantially the same as the liquid crystal display 1000 except that the liquid crystal display 2000 includes the organic film 350. The same components and operations in FIGs. 1 and 2 are denoted by the same reference numerals. The following description will be made based on the differences between FIG.1 and FIG.2.

Referring to FIG. 2, the organic film 350 is formed in a region corresponding to the storage capacitor 130 on the upper substrate 310. More specifically, the common electrode 340 is formed on the upper substrate 310, and the organic film 350 is then formed in the region corresponding to the lower electrode 131 of the storage capacitor 130 on the common electrode 340.

The organic film 350 is provided to constantly maintain the ratio of the distance traveled through the liquid crystal layer 210 by the light reflected from the lower electrode 131 to the distance traveled through the liquid crystal layer 210 by the light passing through the first color filter 331 of the transmission region. In other words, the organic film 350 forms a dual cell gap.

The distance from the lower substrate 110 to the upper substrate 310 is referred to as a cell gap. Also, in order to constantly maintain the ratio of the distanced traveled by the light transmitting through the lower substrate 110 from the backlight unit to the distance traveled by the light reflected from the lower substrate 110, the cell gaps between the upper substrate 310 and the lower substrate 110 should be formed to be different in different regions. The differently formed cell gaps are referred to as a dual cell gap.

Referring to FIG. 2, when the external light enters the liquid crystal display 2000 through the upper substrate 310 and reaches the lower electrode 131 through the organic film 350, it is reflected and travels through the organic film 350 again. Accordingly, the distance that the external light travels through the liquid crystal layer 210 is reduced due to the presence of the organic film 350, as compared to the distance traveled in the case where the organic film 350 is not present.

By forming the organic film 350 with a suitable thickness, the distance traveled by the external light can be made to be equal to the distance traveled by the light transmitted through the lower substrate 110 from the BLU and reaching the transmission region formed with the color filter 331.

When comparing the thickness of the organic film 350 with the thickness of the liquid crystal layer 210, in some embodiments, the thickness of the organic film 350 is about half of the thickness of the liquid crystal layer 210. If the organic film 350 has half of the thickness of the liquid crystal layer 210, a portion of the liquid crystal layer 210 below the organic film 350 also has half of the thickness of the liquid crystal layer 210 in regions without the organic film 350. Accordingly, the distance traveled by the external light can theoretically be made to be equal to the distance traveled by the light transmitted from the BLU. If the distance traveled by the reflected external light is equal to the distance traveled by the light transmitted from the BLU, that is, if the distance traveled by the light in the transmission region is equal to the distance traveled by the light in the reflective region, the transmission efficiency of each light is substantially the same so that the same brightness can be obtained. Accordingly, in some embodiments, the organic film 350 has half of the thickness of the liquid crystal layer 210. Also, as to the material of the organic film 350, any suitable material capable of performing photolithography such as acrylic based resin can be used.

As described above, in the liquid crystal display 2000, the organic film 350 is provided to control the distance traveled by the reflected external light and the distance traveled by the light from the BLU, thereby making it possible to obtain substantially the same transmission efficiency and brightness. Also, in the liquid crystal display 2000, the black matrix 320 is not formed in the reflective region corresponding to the lower electrode 131 of the storage capacitor 130 in the upper substrate 310. And the color filter 330 may be formed instead of the black matrix 320 so that the external light reflected from the lower electrode 131 can be transmitted through the upper substrate 310.

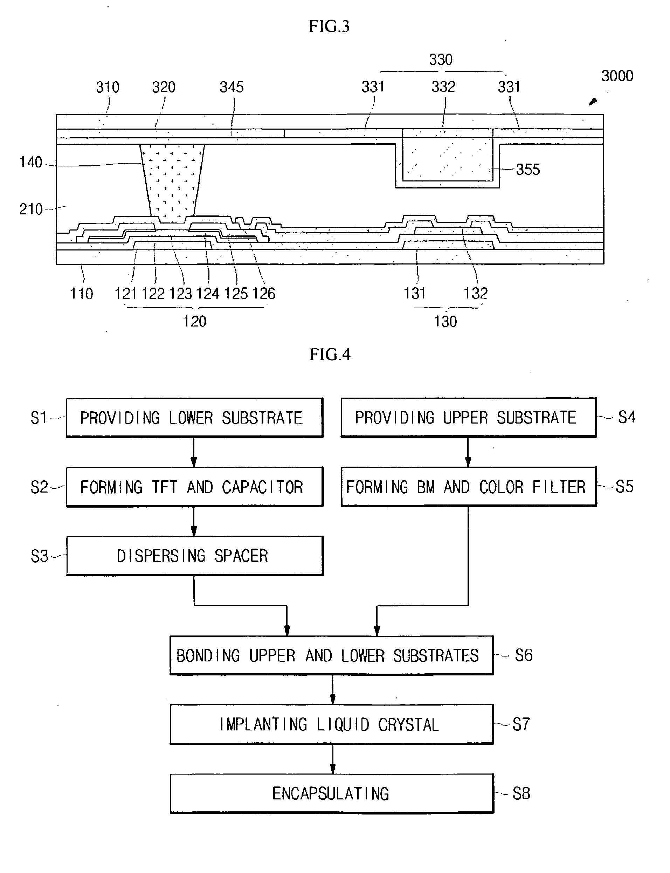

Referring to FIG. 3, a liquid crystal display 3000 according to yet another comparative example which is not part of the present invention will be described.

FIG. 3 is a cross-sectional view illustrating a structure of the liquid crystal display 3000.

Referring to FIG. 3, the liquid crystal display 3000 includes the lower substrate 110, the thin film transistor 120, the storage capacitor 130, the spacer 140, the liquid crystal layer 210, the upper substrate 310, the black matrix 320, the color filter 330, a common electrode 345, and an organic film 355.

The difference between the liquid crystal display 3000 and the liquid crystal display 2000 is that the organic film 355 is formed on the upper substrate 310 first, and then the common electrode 345 is formed. In other words, the embodiment illustrated in FIG. 3 is substantially the same as the embodiment illustrated in FIG. 2 except for the order in which the organic film 355 and the common electrode 345 are formed. The same components and operations in FIGs. 2 and 3 are denoted by the same reference numerals. The following description will be made based on the differences between FIGs. 2 and 3.

The organic film 355 is formed on a region of the color filter 330 corresponding to the storage capacitor 130, that is, in the reflective region, after the black matrix 320 and the color filter 330 are formed on the upper substrate 310. Accordingly, the organic film 355 is formed on the upper substrate 310 in the reflective region, and the black matrix 320 is not in the reflective region. Also, the color filter 330 is formed in the reflective region.

The organic film 355 is formed to provide the dual cell gap, as the organic film 350 does in the liquid crystal display 2000 shown in FIG. 2. Accordingly, since the organic film 355 is substantially the same as the organic film 350 in the liquid crystal display 2000, the description of the organic film 355 in the liquid crystal display 3000 will be omitted.

The common electrode 345 is formed over the upper substrate 310 after the organic film 355 is formed. In other words, the common electrode 345 is formed at the end of the manufacturing process of the upper substrate 310. In other words, the common electrode 345 is substantially the same as the common electrode 340 in the liquid crystal display 2000 of FIG. 2 except that the common electrode 345 is formed after the organic film 355 is formed. Thereafter, the alignment film is printed on the common electrode 345, and the rubbing process is performed thereon. The seal printing process is substantially the same as the process described in reference to FIGs. 1 and 2. Therefore, redundant description of the common electrode 345 will be omitted.

Hereinafter, the manufacturing method of the liquid crystal display 1000 will be described.

FIG. 4 shows a flow diagram for explaining a manufacturing method of the liquid crystal display 1000 according to one embodiment of the present invention.

Referring to FIG. 4, the manufacturing method of the liquid crystal display 1000 includes the steps of: providing a lower substrate S1; forming a thin film transistor and a storage capacitor S2; dispersing a spacer S3; providing an upper substrate S4; forming a black matrix and a color filter S5; bonding the lower substrate and the upper substrate S6; implanting (or injecting) a liquid crystal S7; and encapsulating S8.

The step S1 of providing the lower substrate provides the lower substrate 110, which is an original plate, formed with the thin film transistor 120. Since the light of the BLU is transmitted as described above, the material of the lower substrate 110 should be transparent and may be formed of glass. It is previously mentioned that a fusion method or a floating method may be used as a method of making the glass for the lower substrate 110.

The step S2 of forming the thin film transistor and the storage capacitor forms the thin film transistor 120 and the storage capacitor 130 on the upper side of the lower substrate 110. The thin film transistor 120 is constituted by the gate electrode 121, the gate insulating layer 122, the silicon layer 123, the source/drain electrode 125, and the protective layer 126. The detailed description of the process for forming the thin film transistor 120 and the storage capacitor 130 will be described later. Also, although not shown separately, the step of forming the alignment film follows the step S2 of forming the thin film transistor and the capacitor. Thereafter, the rubbing process of the alignment film can be performed.

The step S3 of dispersing the spacer forms the spacer 140 on the upper side of the lower substrate 110. The spacer 140 is formed to maintain a suitable gap (e.g., a predetermined gap) between the upper and lower substrates 310 and 110 as described above. As to the methods of forming the spacer 140, there are a dry method and a wet method as described above.

The step S4 of providing the upper substrate provides the upper substrate 310, which is an original plate for the black matrix 320 and the color filter 330. The upper substrate 310 should be transparent so that it can transmit light. Therefore, in some embodiments, glass is used for the upper substrate 310. Since the upper substrate 310 is substantially the same as the lower substrate 110, the description thereof will be omitted.

The step S5 of forming the black matrix and the color filter forms the black matrix 320 and the color filter 330 on the upper substrate 310. In the liquid crystal display 1000, the black matrix 320 located on the upper substrate 310 is not formed (or removed) from the reflective region corresponding to the storage capacitor 130, and, in some embodiments, the second color filter 332 is formed in the reflective region. Accordingly, the step S5 of forming the black matrix and the color filter forms the black matrix 320 and the color filter 330 using the mask formed with a pattern so that light can be transmitted into the region of the upper substrate 310 corresponding to the storage capacitor 130.

After the step S5 of forming the black matrix and the color filter, the seal printing process for printing the sealant can be carried out. The liquid crystal cell can be formed in the panel that includes the upper substrate 310 and the lower substrate 110 through the cell printing process.

The step S6 of bonding the upper and lower substrates bonds the upper substrate 310 and the lower substrate 110 together. A substantially constant gap between the two substrates is maintained by the spacer 140. After the step S6 of bonding the upper and lower substrates, the bonded substrates can be divided in a cutting process into panels. The cutting process is not shown separately in FIG. 4.

The step S7 of implanting (or injecting) the liquid crystal implants the liquid crystal layer 210 into the space between the bonded substrates of the divided panels. The substrates of the panels are provided with the liquid crystal cells. An exemplary method that can efficiently implants the liquid crystal layer 210 into the liquid crystal cell is a vacuum implantation method that uses a pressure difference between inside and outside of the liquid crystal cell to implant the liquid crystal layer 210.

The encapsulating step S8 prevents the liquid crystal layer 210 from leaking out of an inlet of the liquid crystal cell after the implantation of the liquid crystal layer 210 is completed. The inlet is usually sealed by coating the inlet with an ultraviolet ray curable resin using a dispenser and then irradiating the resin with an ultraviolet ray.

Hereinafter, an exemplary manufacturing process of a liquid crystal display will be described using a cross-sectional view.

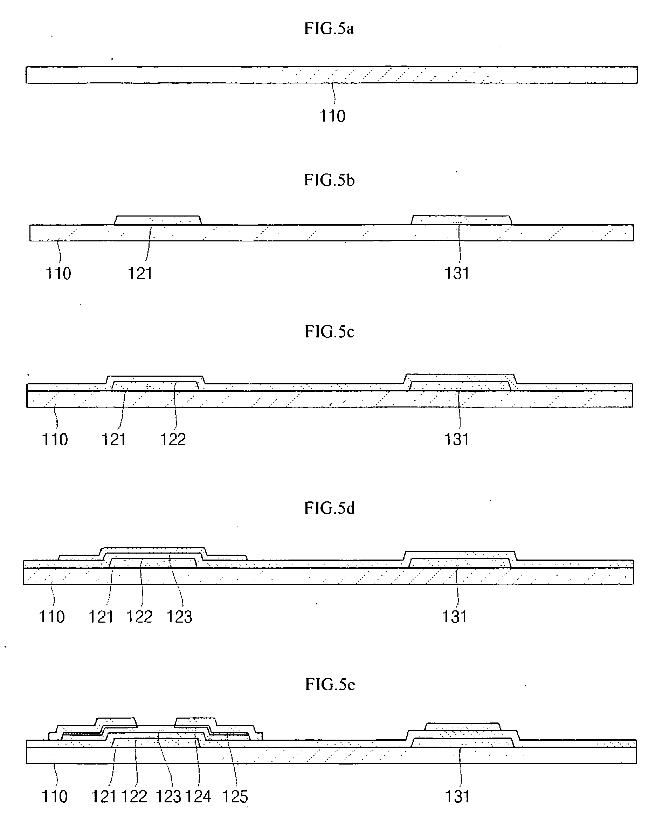

FIGs. 5a to 5l show cross-sectional views for explaining the manufacturing process according to one embodiment of the present invention.

FIG. 5a shows the lower substrate 110. The lower substrate 110 is formed of glass, and its thickness is between about 0.5 to 0.7mm.

Referring to FIG. 5b, on the upper side of the lower substrate 110 the gate electrode 121 of the thin film transistor 120 and the lower electrode 131 of the storage capacitor 130 are formed. The gate electrode 121 and the lower electrode 131 may be formed of the same material or different material. However, since the liquid crystal display 1000 according to one embodiment of the present invention uses the lower electrode 131 as the reflective electrode, the lower electrode 131 can be formed using Al, AlNd, Mo, Cr, Mo/AlNd(double), MoW, or an equivalent thereof.

Referring to FIG. 5c, the gate insulating layer 122 is over the gate electrode 121 and the lower electrode 131. The gate insulating layer 122 may be deposited using, for example, silicon nitride SiNₓ. The gate insulating layer 122 may be formed by, for example, the PECVD method.

Referring to FIG. 5d, on the gate insulating layer 122, the silicon layer 123 is formed. It is previously mentioned that the silicon layer 123 may be formed, for example, using amorphous silicon (a-Si) because the glass of the lower substrate 110 is amorphous, or may use poly silicon (poly-Si) in order to increase electron mobility.

Referring to FIG. 5e, on the upper side of the silicon layer 123, the semiconductor layer 124 and the source/drain electrode 125 are formed.

The semiconductor layer 124 can be formed by doping impurities using a mask after forming the silicon layer 123. For example, the ion implantation method can be used as the method for doping the impurities.

After forming the semiconductor layer 124, the source/drain electrode 125 is formed by depositing a metal layer on the lower substrate 110 and then etching it in a desired pattern using a mask. Also, a second layer above the lower electrode 131 of the storage capacitor 130 may form a upper electrode of the storage capacitor 130. And the second layer above the reflective layer 131 is formed with the source/drain electrode 125 in the same step.

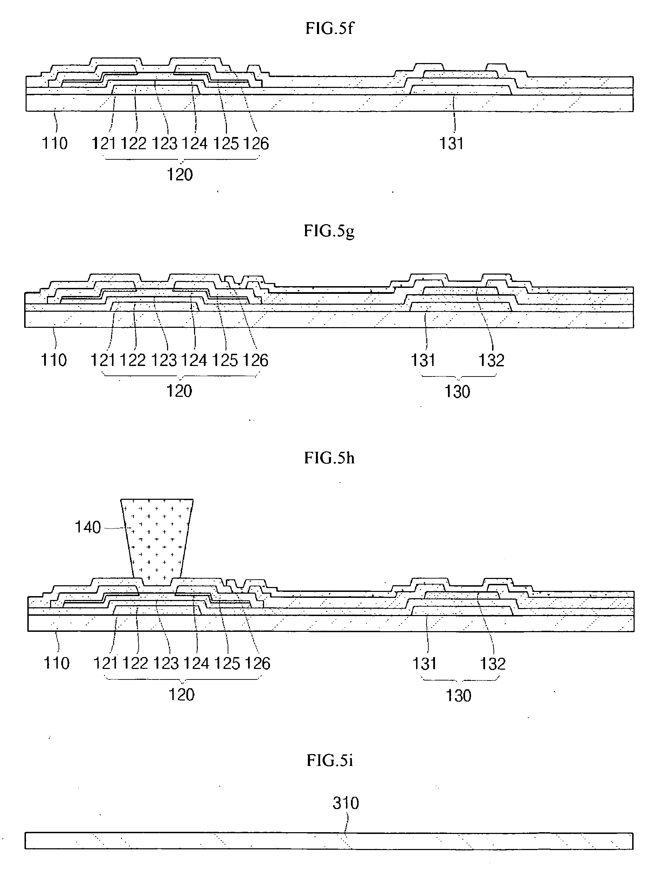

Referring to FIG. 5f, the protective layer 126 is formed on the lower substrate 110 over the source/drain electrode 125. The protective layer 126 can be etched in a desired pattern using a mask after depositing the protective layer material over the lower substrate 110. Referring to FIG. 5f, it can be appreciated that a portion of the protective layer 126 on the upper surface of the source/drain electrode 125 is etched away to provide a via hole to allow an electrical connection between the source/drain electrode 125 and the pixel electrode 132 shown in FIG. 5g.

Referring to FIG. 5g, on the lower substrate 110, the pixel electrode 132 is formed. Since the pixel electrode 132 should be transparent to be able to transmit light, it may be made of, for example, indium tin oxide (ITO). As shown in FIG. 5g, the pixel electrode 132 can be used as the upper electrode of the storage capacitor 130.

Although not shown separately, after the pixel electrode 132 is formed, the alignment film printing and rubbing processes are performed in order to constantly maintain the direction of the liquid crystals in the liquid crystal layer 210.

Referring to FIG. 5h, a spacer 140 is formed on the upper surface of the protective layer 126. Since the spacer 140 does not transmit light, it is formed at a region on the upper side of the thin film transistor 120 that is not capable of transmitting light, in order to raise the aperture ratio. The spacer 140 protects the liquid crystal layer 210 by bonding the lower substrate 110 to the upper substrate 310 and then constantly maintaining a gap therebetween. Since the material and the manufacturing process of the spacer 140 are described in the foregoing description, the description thereof will be omitted.

Referring to FIG. 5i, there is shown the upper substrate 310. The method of forming the upper substrate 310 is the same as that of the lower substrate 110 as described above.

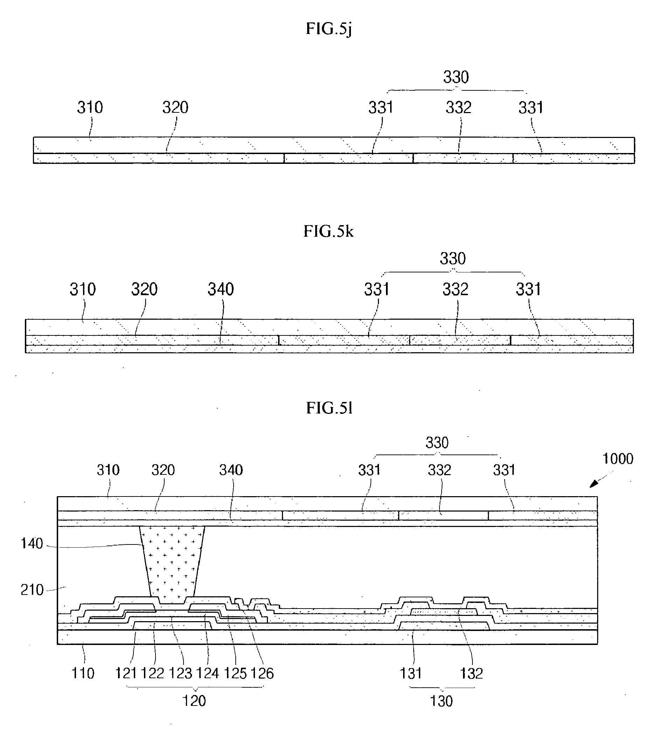

Referring to FIG. 5j, on the upper surface of the upper substrate 310 are the black matrix 320 and the color filter 330. The black matrix 320 is formed in the region corresponding to the thin film transistor 120 of the lower substrate 110, and the color filter 330 is formed on a region of the upper substrate 310 other than the region of the black matrix 320. Only the black matrix 320 is removed from (or not formed in) the reflective region of the upper substrate 310 corresponding to the storage capacitor 130 on the lower substrate 110. In some embodiments, the color filter 330 can be formed in the reflective region.

Referring to FIG. 5k, the common electrode 340 is on the black matrix 320 and the color filter 330. Since the common electrode 340 is formed in substantially the same manner as the pixel electrode 132, except that the common electrode 340 is formed over the upper substrate 310, the description thereof will be omitted.

Although not shown separately, the alignment film printing and rubbing processes are further performed in order to constantly maintain the direction of the liquid crystals in the liquid crystal layer 210 after the common electrode 340 is formed. Also, after these processes, the seal printing process is performed in order to form the liquid crystal cell.

Referring to FIG. 5l, as a final process the upper substrate 310 and the lower substrate 110 are bonded, and the bonded substrates are cut into panels. The gap between the upper substrate 310 and the lower substrate 110 is constantly maintained by the spacer 140, and the liquid crystal layer 210 is implanted (or injected) into the space between the substrates. An exemplary method for implanting the liquid crystal layer 210 is the vacuum implantation method described above.

Hereinafter, the manufacturing method of the liquid crystal display 2000 and the liquid crystal display 3000 will be described using a flow diagram.

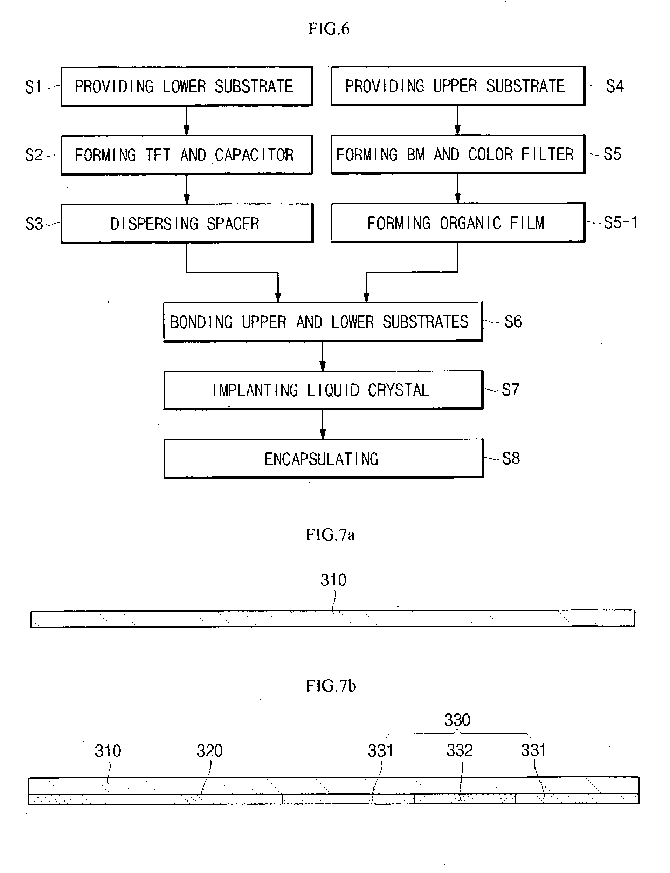

FIG. 6 is a flow diagram for explaining a manufacturing method of the liquid crystal display 2000 and the liquid crystal display 3000.

Referring to FIG. 6, the manufacturing method of the liquid crystal displays 2000 and 3000 includes the following steps: providing a lower substrate S1; forming a thin film transistor and a storage capacitor S2; forming a spacer S3; providing an upper substrate S4; forming a black matrix and a color filter S5; bonding the lower substrate and the upper substrate S6; implanting (or injecting) a liquid crystal S7; encapsulating S8; and forming an organic film S5-1 after forming the black matrix and the color filter.

In other words, as compared to the manufacturing method of the liquid crystal display 1000 of FIG. 4, the only difference is that the step S5-1 of forming organic film is further provided after the step S5 of forming the black matrix and the color filter. The same components and operations are denoted by the same reference numerals. The following description will be made based on the difference.

The step S5-1 of forming the organic film is further provided after the step S5 of forming the black matrix and the color filter as described above. In other words, the organic film 350 is formed on the upper substrate 310 after forming the black matrix 320 and the color filter 330. As previously described, the organic film 350 should be formed on a region of the upper substrate 310 corresponding to the lower electrode 131 of the storage capacitor 130. In order to form the organic film 350 in a desired pattern, the photolithography method can be used. Also, any material to which the photolithography method can be applied can be used as the material of the organic film 350. Also, the organic film 350 is formed to provide the dual cell gap as described above.

Since processes other than the organic film forming process are substantially the same as the corresponding processes for manufacturing the liquid crystal display 1000 according to one embodiment of the present invention described above, the description thereof will be omitted.

Hereinafter, the manufacturing process of the liquid crystal display 3000 will be described using a cross-sectional view.

FIGs. 7a to 7e show cross-sectional views of the liquid crystal display 3000 for explaining the manufacturing process of the upper substrate 310 in the manufacturing process of the liquid crystal display 3000. Only the manufacturing process of the upper substrate 310 is described because the lower substrate 110 of the liquid crystal display 3000 is substantially the same as the lower substrate 110 of the liquid crystal display 1000 described above.

Referring to FIG. 7a, there is shown the upper substrate 310. The upper substrate 310 may be formed of glass.

Referring to FIG. 7b, on the upper substrate 310, the black matrix 320 and the color filter 330 are formed. The black matrix 320 is formed on the non-reflective region of the upper substrate 310 corresponding to the thin film transistor 120 on the lower substrate 110. Also, the black matrix 320 is not formed on the reflective region of the upper substrate 310 corresponding to the storage capacitor 130. Also, it is previously mentioned that the color filter 330 can be formed on the reflective region of the upper substrate 310 corresponding to the storage capacitor 130 in some embodiments.

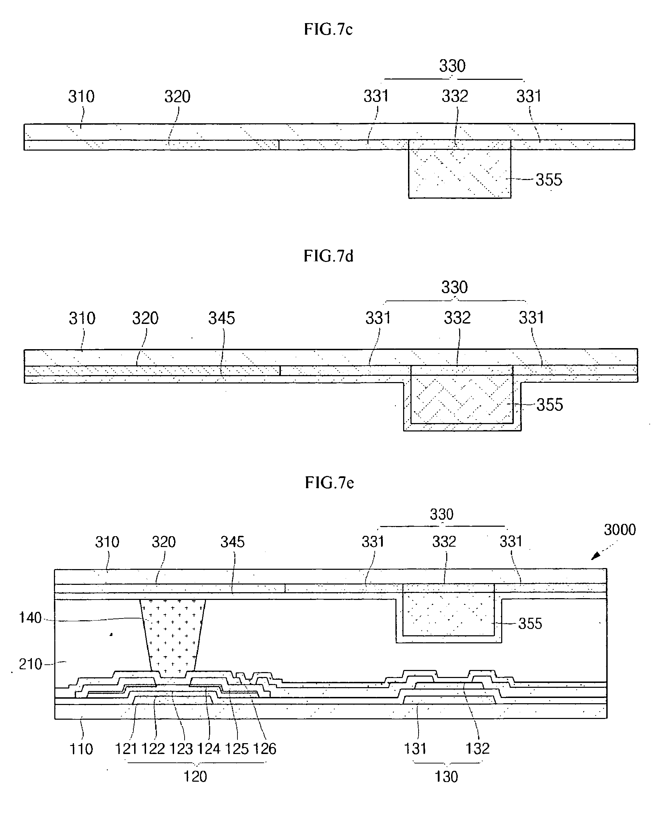

Referring to FIG. 7c, the organic film 355 is formed on the upper substrate 310 on which the black matrix 320 and the color filter 330 are formed. The organic film 355 is formed on the reflective region of the upper substrate 310 corresponding to the storage capacitor 130 on the lower substrate 110. In order to form the pattern, the photolithography process can be used. It is previously mentioned that the organic film 350 provides the dual cell gap structure.

Referring to FIG. 7d, the common electrode 345 is formed on the upper substrate 310 on which the organic film 355 is formed. The common electrode 345 is formed over the upper substrate 310.

Although not shown separately, after the common electrode 345 is formed, the alignment printing process, the rubbing process and the seal printing process can further be performed.

Referring to FIG. 7e, the processes for bonding the upper substrate 310 and the lower substrate 110, cutting the bonded substrates into panels, and implanting the liquid crystal layer 210 into the cut substrates are performed. Also, the encapsulating process is performed to prevent the liquid crystal layer 210 from leaking out of the inlet of the liquid crystal cell by which the implantation of the liquid crystal layer 210 is completed. The inlet may be sealed by coating it with an ultraviolet ray curable resin using the dispenser and then irradiating the coating with the ultraviolet ray.

According to the above description, the liquid crystal display 3000 can be manufactured. Also, although not shown and described separately, the difference between the liquid crystal displays 2000 and 3000 is in the order of forming the organic films 350 and 355 and the common electrodes 240 and 245. Accordingly, referring to the manufacturing method of the liquid crystal display 3000, those skilled in the art to which the present invention pertains can manufacture the liquid crystal display 2000 according to other embodiments of the present invention, and the description thereof will be omitted.

A liquid crystal display according to the embodiments of the present invention uses the metal electrode of the storage capacitor as the reflector so that the manufacturing process of a separate reflective electrode can be avoided.

According to the described embodiments, a liquid crystal display for displaying images can include a color filter on the reflective region of the upper substrate corresponding to the storage capacitor on the lower substrate that reflects light in the reflective region.

Further, according to the embodiments, the image quality of the reflective region can be improved by forming the organic film for the dual cell gap structure on the reflective region of the upper substrate corresponding to the storage capacitor on the lower substrate.

In addition, according to the embodiments, the transflective liquid crystal display can be manufactured at a low cost by a suitable process.

While the present invention has been described in connection with certain exemplary embodiments, it is to be understood that the invention is not limited to the disclosed embodiments, but, on the contrary, is intended to cover various modifications and equivalent arrangements included within the scope of the appended claims, and equivalents thereof.

## Claims

1. A transflective liquid crystal display (2000) comprising:
a first substrate (110);
a second substrate (310) spaced apart from and facing the first substrate (110);
a thin film transistor (120) on a side of the first substrate (110) facing the second substrate (310);
a storage capacitor (130) on the side of the first substrate (110) facing the second substrate (310), wherein the storage capacitor (130) comprises a reflective electrode (131) configured to reflect external light received through the second substrate (310);
a transparent pixel electrode (132) on a side of the first substrate (110) facing the second substrate (310);
a black matrix (320) on a side of the second substrate (310) facing the first substrate (110);
a color filter (330) on the side of the second substrate (310) facing the first substrate (110);
a liquid crystal layer (210) between the first substrate (110) and the second substrate (310);
a common electrode (340) on the black matrix (320) and the color filter (330); and
an organic film (350, 355) on a reflective region of the second substrate (310), the reflective region corresponding to the storage capacitor (130) on the first substrate (110);
**characterized in that** the organic film (350) is on the common electrode (340).

2. The transflective liquid crystal display as claimed in claim 1, wherein the storage capacitor (130) further comprises a pixel electrode (132).

3. The transflective liquid crystal display as claimed in one of the preceding claims,
wherein the reflective electrode (131) of the storage capacitor (130) comprises any material selected from Al, AlNd, Mo, Cr, Mo/AlNd(double), MoW.

4. The transflective liquid crystal display as claimed in one of the preceding claims,
wherein the color filter (330) is located on a reflective region of the second substrate (310), and the reflective region corresponds to the storage capacitor (130) on the first substrate (110).

5. The transflective liquid crystal display as claimed in one of the preceding claims,
wherein the black matrix (320) is located on a region of the second substrate (310) that is different from a reflective region of the second substrate (310), and the reflective region corresponds to the storage capacitor (130) on the first substrate (110).

6. The transflective liquid crystal display as claimed in one of the preceding claims,
wherein a thickness of the organic film (340, 345) is one half the total thickness of the liquid crystal layer (210).

7. The transflective liquid crystal display as claimed in one of the preceding claims,
wherein the color filter comprises a first color filter (331) and a second color filter (332) and the second color filter (332) is located on a reflective region of the second substrate (310), the reflective region corresponding to the storage capacitor (130) on the first substrate (110).

## Patentansprüche

1. Eine transflexive Flüssigkristallanzeige (2000), umfassend:
ein erstes Substrat (110);
ein zweites Substrat (310), das mit Abstand von dem ersten Substrat (110) angeordnet ist und ihm zugewandt ist;
einen Dünnfilmtransistor (120) auf einer dem zweiten Substrat (310) zugewandten Seite des ersten Substrats (110);
einen Speicherkondensator (130) auf der dem zweiten Substrat (310) zugewandten Seite des ersten Substrats (110), wobei der Speicherkondensator (130) eine reflektierende Elektrode (131) umfasst, die dazu ausgelegt ist, durch das zweite Substrat (310) empfangenes externes Licht zu reflektieren;
eine transparente Pixelelektrode (132) auf einer dem zweiten Substrat (310) zugewandten Seite des ersten Substrats (110);
eine Schwarzmatrix (320) auf einer dem ersten Substrat (110) zugewandten Seite des zweiten Substrats (310);
ein Farbfilter (330) auf der dem ersten Substrat (110) zugewandten Seite des zweiten Substrats (310);
eine Flüssigkristallschicht (210) zwischen dem ersten Substrat (110) und dem zweiten Substrat (310),
eine gemeinsame Elektrode (340) auf der Schwarzmatrix (320) und dem Farbfilter (330); und
einen organischen Film (350, 355) auf einem reflektierenden Bereich des zweiten Substrats (310), wobei der reflektierende Bereich dem Speicherkondensator (130) auf dem ersten Substrat (110) entspricht;
**dadurch gekennzeichnet, dass** sich der organische Film (350) auf der gemeinsamen Elektrode (340) befindet.

2. Die transflexive Flüssigkristallanzeige nach Anspruch 1, wobei der Speicherkondensator (130) ferner eine Pixelelektrode (132) umfasst.

3. Die transflexive Flüssigkristallanzeige nach einem der vorhergehenden Ansprüche, wobei die reflektierende Elektrode (131) des Speicherkondensators (130) irgendein aus Al, AlNd, Mo, Cr, Mo/AlNd(Doppel), MoW ausgewähltes Material umfasst.

4. Die transflexive Flüssigkristallanzeige nach einem der vorhergehenden Ansprüche, wobei das Farbfilter (330) auf einem reflektierenden Bereich des zweiten Substrats (310) angeordnet ist und der reflektierende Bereich dem Speicherkondensator (130) auf dem ersten Substrat (110) entspricht.

5. Die transflexive Flüssigkristallanzeige nach einem der vorhergehenden Ansprüche, wobei die Schwarzmatrix (320) auf einem Bereich des zweiten Substrats (310) angeordnet ist, der von einem reflektierenden Bereich des zweiten Substrats (310) verschieden ist, und der reflektierende Bereich dem Speicherkondensator (130) auf dem ersten Substrat (110) entspricht.

6. Die transflexive Flüssigkristallanzeige nach einem der vorhergehenden Ansprüche, wobei eine Stärke des organischen Films (340, 345) die Hälfte der Gesamtstärke der Flüssigkristallschicht (210) beträgt.

7. Die transflexive Flüssigkristallanzeige nach einem der vorhergehenden Ansprüche, wobei das Farbfilter (331) ein erstes Farbfilter (331) sowie ein zweites Farbfilter (332) umfasst und das zweite Farbfilter (332) auf einem reflektierenden Bereich des zweiten Substrats (310) angeordnet ist, wobei der reflektierende Bereich dem Speicherkondensator (130) auf dem ersten Substrat (110) entspricht.

## Revendications

1. Écran transflectif (2000) à cristaux liquides comprenant :
un premier substrat (110) ;
un second substrat (310) espacé du premier substrat (110) et lui faisant face ;
un transistor (120) à couches minces sur un côté du premier substrat (110) faisant face au second substrat (310) ;
un condensateur (130) de mémorisation sur le côté du premier substrat (110) faisant face au second substrat (310), dans lequel le condensateur (130) de mémorisation comprend une électrode réfléchissante (131) configurée pour réfléchir de la lumière externe reçue à travers le second substrat (310) ;
une électrode transparente (132) de pixel sur le côté du premier substrat (110) faisant face au second substrat (310) ;
une matrice noire (320) sur un côté du second substrat (310) faisant face au premier substrat (110) ;
un filtre (330) de couleur sur le côté du second substrat (310) faisant face au premier substrat (110) ;
une couche (210) de cristaux liquides entre le premier substrat (110) et le second substrat (310) ;
une électrode commune (340) sur la matrice noire (320) et le filtre (330) de couleur ; et
un film organique (350, 355) sur une région réfléchissante du second substrat (310), la région réfléchissante correspondant au condensateur (130) de mémorisation sur le premier substrat (110) ;
**caractérisé en ce que** le film organique (350) est sur l'électrode commune (340).

2. Écran transflectif à cristaux liquides selon la revendication 1, dans lequel le condensateur (130) de mémorisation comprend en outre une électrode (132) de pixel.

3. Écran transflectif à cristaux liquides selon l'une des revendications précédentes, dans lequel l'électrode réfléchissante (131) du condensateur (130) de mémorisation comprend une matière choisie à partir de Al, AlNd, Mo, Cr, Mo/AlNd(double), MoW.

4. Écran transflectif à cristaux liquides selon l'une des revendications précédentes, dans lequel le filtre (330) de couleur est situé sur une région réfléchissante du second substrat (310), et dans lequel la région réfléchissante correspond au condensateur (130) de mémorisation sur le premier substrat (110).

5. Écran transflectif à cristaux liquides selon l'une des revendications précédentes, dans lequel la matrice noire (320) est située sur une région du second substrat (310) qui est différente d'une région réfléchissante du second substrat (310), et dans lequel la région réfléchissante correspond au condensateur (130) de mémorisation sur le premier substrat (110).

6. Écran transflectif à cristaux liquides selon l'une des revendications précédentes, dans lequel l'épaisseur du film organique (340, 345) est la moitié de l'épaisseur totale de la couche (210) de cristaux liquides.

7. Écran transflectif à cristaux liquides selon l'une des revendications précédentes, dans lequel le filtre de couleur comprend un premier filtre (331) de couleur et un second filtre (332) de couleur et dans lequel le second filtre (332) de couleur est situé sur une région réfléchissante du second substrat (310), la région réfléchissante correspondant au condensateur (130) de mémorisation sur le premier substrat (110).
